# EUROPÄISCHE PATENTSCHRIFT

(11) **EP 0 968 245 B1**
(45) Veröffentlichungstag und Bekanntmachung des Hinweises auf die Patenterteilung: **27.02.2002**
(21) Anmeldenummer: 98919067.3
(22) Anmeldetag: 10.03.1998
(51) Int. Cl.: C08J 3/12

(54) **REDISPERGIERBARE DISPERSIONSPULVER AUF BASIS VON POLYACRYLATEN**
REDISPERSABLE POLYACRYLATE-BASED DISPERSION POWDER
POUDRE POUR DISPERSION REDISPERSIBLE A BASE DE POLYACRYLATES

(30) Priorität: 13.03.1997 DE 19710381; 13.03.1997 DE 19710382
(43) Veröffentlichungstag der Anmeldung: 05.01.2000
(73) Patentinhaber: Buna Sow Leuna Olefinverbund GmbH, 06258 Schkopau (DE)
(72) Erfinder: ROTHENHÄUSSER, Bernd, D-06124 Halle (DE); KÜHN, Hartmut, D-06130 Halle (DE); KIESEL, Volker, D-06122 Halle (DE); WICHMANN, Andreas, D-06258 Schkopau (DE); ELSÄSSER, Dominik, CH-8833 Samstagern (CH)
(86) Internationale Anmeldenummer: DE9800693
(87) Internationale Veröffentlichungsnummer: WO9840430

(56) Entgegenhaltungen:
- EP-A- 0 420 097
- EP-A- 0 601 518
- WO-A-97/38042

## Beschreibung

Die Erfindung betrifft gut redispergierbare Pulver auf Basis von Polyacrylaten, die sich für den Einsatz in Mörtelmischungen eignen und diesen eine gute Fließfähigkeit bzw. thixotrope Eigenschaften bei schnellem Abbindeverhalten verleihen.

Um eine leichtere Handhabung und eine gleichmäßigere Qualität zu erreichen, werden in der Bauindustrie in immer größerem Umfang Fertigmischungen für die unterschiedlichsten Einsatzzwecke angeboten.
Dabei handelt es sich um Mörtel und Kleber auf Basis von Sand und Zement, die durch den Zusatz polymerer Dispersionspulver modifiziert werden.
Zur Herstellung solcher hydraulisch abbindender Systeme für selbstverlaufende Ausgleichmassen, die gut fließfähige, schnell härtende und im abgebundenen Zustand bis zu einem gewissen Grade flexible Massen bilden oder für thixotrope Kleber,die sich gut verarbeiten lassen und schnell härtende und im abgebundenen Zustand bis zu einem gewissen Grade flexible Massen bilden, werden häufig Dispersionspulver auf Basis von Polyacrylaten eingesetzt.
Dies ist vor allem dann wichtig, wenn es sich um sogenannte "kritische" Untergründe handelt. Darunter versteht man Untergründe, die bei Feuchtigkeitsbelastung zu Formveränderungen neigen, wie beispielsweise Holz, Spanplatten oder Gipskarton.
Weiterhin zählen zu den "kritischen" Untergründen Böden im Sportstättenbauten, im Schiffsbau und anderen federnden Unterbodenkonstruktionen sowie in Naßzellen. Gleichzeitig werden an solche Massen die Forderung nach einem Selbstverlauf zu planebenen und stuhlrollenfesten Oberflächen gestellt, d. h., die Ausgleichsmasse muß Risse überbrücken und alle Unebenheiten selbstverlaufend ausgleichen. Danach soll sie schnell und rißfrei aushärten.
Außerdem kann an solche Massen die Forderung nach einer entsprechenden Thixotropie gestellt werden, die gewährleistet, daß sich die Klebemasse gut aufkämmen läßt, d.h., die Klebemasse muß sich leicht mit einem Zahnspachtel aufstreichen lassen. Weiterhin muß die aufgestrichene Klebemasse eine ausreichende Offenzeit aufweisen und anschließend schnell aushärten.
Um diese Forderungen erfüllen zu können, müssen die für die Modifizierung notwendigen Dispersionspulver entsprechende Eigenschaften aufweisen.
Grundsätzlich gehört hierzu eine Mindestfilmbildungstemperatur der Polymergrundlage von < 0 °C.
Da die Redispergierbarkeit des Pulvers im entscheidenden Maße die Wirksamkeit des Vergütungsmittels bestimmt, muß die Redispersion in ihren Eigenschaften denen der Ausgangsdispersion weitgehendst gleichen. Hierbei kommt es nicht nur auf die Redispergierbarkeit bis zur Ausgangsteilchengröße, sondern auch auf Eigenschaften wie Zugfestigkeit und Dehnung des aus der Redispersion gezogenen Filmes an. Nur wenn die Redispersion in ihren Eigenschaften denen der Ausgangsdispersion weitgehendst gleicht, ist gewährleistet, daß die volle Wirksamkeit des Pulvers erreicht wird.
Allgemein eignen sich zur Herstellung solcher Pulver Dispersionen auf Basis von Copolymeren aus Styren und Acrylsäureestern. Diese können auch mit anderen Monomeren wie ungesättigten Carbonsäuren oder Amiden modifiziert werden.
Diese Polymeren lassen sich leicht durch die Wahl der jeweiligen Copolymerenzusammensetzung dem gewünschten Eigenschaftsbild anpassen und zeichnen sich durch eine gute Verseifungbeständigkeit aus. Weiterhin verschlechtert der Einbau von carboxylgruppenhaltigen Monomeren die Redispergierbarkeit eines mit Ligninsulfonat als Sprühhilfsmittel hergestellten Pulvers.
Die EP 0601518 A1 beschreibt dazu ein Copolymer auf Basis von Acrylaten, das als Comonomer eine ungesättigte Carbonsäure enthält.
Gleichzeitig wird die Verwendung von Acrylamid als weiteres mögliches Comonomer erwähnt. Der Anteil an ungesättigten Carbonsäuren ist die Voraussetzung für den Einsatz von Polyvinylalkohol, gegebenenfalls im Gemisch mit Ligninsulfonat als Sprühhilfsmittel. Der Nachteil dieser Verfahrensweise ist aber die Wasseranfälligkeit des Systems Polymere in alkalischen Systemen, wie sie die Mörtel darstellen.
In der DE 39 23 229 A1 werden Copolymere auf Basis Styren, Butylacrylat und Acrylamid aufgeführt, die mit Phenolsäure-Formaldehyd-Kondensaten versprüht werden. Es zeigt sich, daß der Einbau von Acrylamid das Abbindeverhalten beeinflußt und schon Mengen von 2 Gew.-% die Erstarrungszeit nach Vicat um das Doppelte ansteigen lassen.
Weiterhin werden in der DE-OS 20 49 114 solche Polymeren mit sulfonathaltigen Kondensationsprodukten aus Melamin und Formaldehyd und in der DE-OS 31 43 070 mit Naphtalinsulfonsäure-Formaldehyd-Kondensaten versprüht.
Solche Verbindungen sind, wie auch Ligninsulfonate dafür bekannt, daß sie eine verflüssigende Wirkung auf Zement besitzen. Allerdings steigem sie die Wasseranfälligkeit des Systems erheblich.
Bekannt ist auch, gut dispergierbare Pulver auf Basis von carboxylierten butadienhaltigen Copolymeren aus Styren und/oder Acrylnitril herzustellen, indem carboxylierte Styren-Butadien-Latices mit einem Gehalt an ungesättigten Carbonsäuren von 0,5 bis 15 Gew.-% bezogen auf Polymeres mit Sprühhilfsmittelmischungen bestehend aus 1 bis 15 Gew.-% eines Salzes der alkylierten Di-phenyl-ether-di-sulfonsäure, Kaseinat und N-alkylsulfosuccinamid oder 1 bis 20 Gew.-% eines Di- oder Tetra-Natrium- bzw. Kalium -Salzes eines Additionsproduktes aus N-alkyl-sulfosuccinamaten mit Maleinsäure in Mischung mit Polyvinylalkohol versprüht werden (WO 97/38042).

Gegenstand der vorliegenden Erfindung sind gut redispergierbare Pulver auf Acrylatbasis, die Mörtelmischungen eine gute Fließfähigkeit bei einem schnellen Abbindeverhalten verleihen, wobei sich aus diesen Mörtelmischungen Prismen mit einer erhöhten Bruchdehnung herstellen lassen bzw. die Mörtelmischungen ein thixotropes Verhalten bei entsprechender Offenzeit und einem schnellen Abbindeverhalten verleihen.
Dies wird durch die Merkmale des Anspruch 1erreicht.

Erfindungsgemäße Polymere sind dabei Copolymere bestehend aus Styren und monoolefinisch ungesättigten Carbonsäureestem, insbesondere Acryl- und Methacrylsäureester, wie beispielsweise Butylacrylat, Ehylacrylat, Ethylhexylacrylat, Methylmethacrylat, Ethylmethacrylat, n-Hexylmethacrylat und Butylmethacrylat.
Diese werden mit 0,5 bis 2 Gew.-% eines amingruppenhaltigen Monomeren, wie beispielsweise Methacrylamid, Acrylamid, N-Methylolacrylamid, N-Dimethylaminopropyl-methacrylamid, 2-tert.-Butylamino-ethyl-methacrylat, N,N Di-methylaminoethylmethacrylat, N,N Di-methylamino-propylmethacrylat, N,N Di-methylamino-ethylacrylat und N,N-Dibutylaminoethyl-acrylat bzw. mit 0,5 bis 4 Gew.-% eines carbonsäurehaltigen Monomeren, wie beispielsweise Acrylsäure, Methacrylsäure, Itaconsäure, Fumarsäure und Maleinsäure allein oder in Mischungen so modifiziert, daß der Hauptanteil dieser Monomeren in die Oberfläche eingebaut werden.
Die Herstellung der redispergierbaren Pulver erfolgt dann in den üblichen Sprühtrocknern, wobei gegebenenfalls Agglomerationseinheiten nachgeschaltet werden können.
Bei diesem Vorgang können noch zusätzlich 2 bis 30 Gew.-% Antiblockmittel, wie beispielsweise Kreide, Talkum, Diatomerde, Kaolin, Silikate, Kieselsäure, Zemente, Calciumcarbonat und ähnliche Stoffe eingeblasen werden.
Im Bedarfsfall setzt man auch Hilfsmittel, wie Viskositätsregler oder Entschäumer ein. Die Trocknungstemperaturen für solche Systeme liegen üblicherweise zwischen 150 und 60 °C.

Die nachfolgenden Beispiele dienen zur weiteren Erläuterung der Erfindung und verdeutlichen die Vorzüge der erfindungsgemäßen Verfahrensweise anhand der erreichten Eigenschaftswerte. Beispielkomplex A bezieht sich auf die Polyacrylate mit amingruppenhaltigen Monomeren, Beispielkomplex B auf die mit carbonsäuregruppenhaltigen Monomeren.Die Beispiele 1 bis 3 stellen jeweils Vergleichsbeispiele dar, erläutern damit den Stand der Technik und sind nicht erfindungsgemäß.

### Beispielkomplex A

**Tab. A/1:**

| Zusammenstellung der in den Beispielen verwendeten Copolymerdispersionen | | |
|---|---|---|
| Copolymer | Monomer | Gew.-% |
| 1 | Styren | 35 |
| | Butylacrylat | 55 |
| | Acrylsäure | 5 |
| | Acrylamid | 5 |
| 2 | Styren | 60 |
| | Butylacrylat | 40 |
| 3 | Styren | 38 |
| | Butylacrylat | 60 |
| | Acrylamid | 2 |
| 4 | Styren | 39 |
| | Butylacrylat | 60 |
| | N,N-Dimethylaminopropylethyl-metharylamid | 1 |
| 5 | Styren | 39,5 |
| | Butylacrylat | 60 |
| | N,N-Dimethylamino-ethylacrylat | 0,5 |
| 6 | Styren | 38 |
| | Ehylacrylat | 60 |
| | Acrylamid | 2 |
| 7 | Styren | 38 |
| | Butylacrylat | 55 |
| | Ethylhexylacrylat | 5 |
| | N-Methylolacrylamid | 2 |

In einem Sprühtrockner werden die in Tabelle A/1 aufgeführten Dispersionen mit den in Tabelle A/2 zusammengestellten Sprührezepturen bei einer Kopftemperatur von 130 °C und einer Ausgangstemperatur von 60 °C unter Zugabe von 12 Gew.-% feinverteiltem Aluminiumsilikat versprüht. In allen Fällen wurde ein rieselfähiges Pulver erhalten.

**Tab. A/2:**

| Sprührezepturen der einzelnen Beispiele | | | |
|---|---|---|---|
| Beispiel | Copolymer | Additionsprodukt Gew.-% bez. auf Polymer | Ligninsulfonat (entzuckert) Gew.-% bez. auf Polymer |
| 1 | 1 | 2 | 10 |
| 2 | 2 | 2 | 10 |
| 3 | 2 | 4 | |
| 4 | 3 | 2 | 10 |
| 5 | 3 | | 10 |
| 6 | 3 | 2 | 10 |
| 7 | 4 | 4 | 10 |
| 8 | 5 | 0,5 | 10 |
| 9 | 6 | 5 | 5 |
| 10 | 7 | | 10 |

### Additionsprodukt: Tetra-Natrium-N-(1,2 dicarboxylethyl)-N-oleylsulfosuccinamat

Von den entstandenen Pulvern wurde das Blockverhalten auf folgendem Weg bestimmt. 50 cm³ Pulver werden in einen Metallzylinder mit einem Innendurchmesser von 60 mm und einer Höhe von 150 mm gefüllt. Dann wird ein Stempel mit einem Gewicht von 3000 g eingesetzt und die Probe bei 20 °C 24 h gelagert.

Danach wird die Pulvertablette langsam aus den Zylinder gedrückt und unter Zuhilfenahme folgender Skala beurteilt:
Note
- 1: keine Pulvertablette
- 2: Pulvertablette ist mit den Fingern nicht aufzunehmen
- 3: Pulvertablette ist mit den Fingern aufzunehmen
- 4: Pulvertablette zerfällt bei leichtem Fingerdruck
- 5: Pulvertablette zerfällt bröcklig
- 6: Pulvertablette bleibt fest geformt.

Die Redispergierbarkeit des Pulvers wird durch eine Sedimentationsanalyse ermittelt. Dazu werden 50 ml einer 5 %igen Redispersion in eine Sedimentationsbürette mit einer 0,1 ml Graduierung gefüllt und die Höhe des Bodensediments nach 24 h abgelesen. Eine als sehr gut einzuschätzende Redispersion darf nach dieser Methode lediglich Werte zwischen 4 und 10 aufweisen. Diese sind durch das Antiblockmittel bedingt.
Weiterhin wird aus dem Pulver eine 50 %ige Redispersion hergestellt. Von dieser wird die entstandene Teilchengröße mit einem Ultrafine Particle Analyser bestimmt. Das Film/Dehnungs-Niveau der aus der Ausgangsdispersion bzw. Redispersion gezogenen Filme im ungeheizten und bei 145 °C, 10 min geheizten Zustand wird nach der DIN 53 504 ermittelt.
Mit diesen Pulvem wurde nach der Rezeptur in Tab.A/3 ein Mörtel hergestellt, aus diesem gemäß DIN 18 555 Probekörper gefertigt und die Biegezugfestigkeit bestimmt.

**Tab. A/3:**

| Mörtelrezeptur Normsandmischung | |
|---|---|
| Sand (mm) | Menge (g) |
| 0,1 - 0,4 | 23,5 |
| 0,1 - 0,63 | 11,8 |
| 0,5-1 | 11,8 |
| 0,7 - 1,25 | 23,5 |
| 1 - 2 | 29,5 |

### Mörtel

| Bestandteil | Menge (g) |
|---|---|
| Normsand | 1200 |
| Zement | 400 |
| Feststoff aus Dispersion | 40 |
| Entschäumer Foammaster PD 1 | 1,5 |
| Wasser | 180 |

An diesen Probekörpem wird auch die Wasseraufnahme bestimmt, indem man nach einer 28tägigen Trockenlagerung die Probekörper 3 Tage in Wasser lagert und anschließend die Wasseraufnahme gravimetrisch bestimmt. Diese wird dann in % angegeben.
Weiterhin werden das Ausbreitmaß nach DIN 18 555 und die Biegezugfestigkeit nach 3 bzw. 7 Tagen bestimmt. Dies dient als Maß für das Abbindeverhalten des Mörtels.

Die Eigenschaften der verwendeten Dispersion und der aus den Pulvem hergestellten Redispersion sind in Tab.A/4 und die Eigenschaften der in den Beispielen hergestellten Pulver in Tab.A/ 5 aufgeführt.

### Beispiel A/1:

Der Latex Nr. 1 aus Tab.A/1, der gemäß EP 0601518 A1 gefertigt wurde, wird , wie Tab.A/ 2 zusammenfassend dargestellt, mit 2 Gew.-% Tetra-Natrium-N-(1,2 dicarboxyl-ethyl)-N-oleylsulfosuccinamat und 10 Gew.-% Ligninsulfonat versetzt und bei 80 °C versprüht. Zusätzlich wurden 12 Gew.-% feinverteilter Kieselsäure eingeblasen.
Es entstand ein freifließendes Pulver mit den in den Tabellen A/4 und A/5 aufgeführten Werten.
Es konnte aber keine vollständige Redispersion hergestellt werden, da ca. 10 Gew.-% des Pulvers nicht redispergierbar waren. Weiterhin fielen sein schlechtes Blockverhalten und die hohe Wasseraufnahme auf.
Die Biegezugfestigkeit war signifikant niedriger als bei den erfindungsgemäßen Beispielen.

### Beispiel A/2:

In diesem Beispiel wurde eine Acrylatdispersion eingesetzt, deren Polymer ohne modifizierende Zusätze von ungesättigter Carbonsäure oder Acrylamid gemäß Beispiel A/1 versprüht wurde. Das entstandene Pulver war noch schlechter redispergierbar (ca. 20 Gew.-% unlösliche Bestandteile) und ergab damit verringerte Werte für die Biegezugfestigkeit.

### Beispiel A/3:

Es wurde die Dispersion 2 aus Tab. A/1 unter Zusatz von 4 Gew.-% Tetra-Natrium-N-(1,2 dicarboxylethyl)-N-oleylsulfosuccinamat versprüht. Die Redispersionswerte verbesserten sich, erreichten aber nicht das erfindungsgemäße Niveau.

### Beispiele A/4 bis A/10:

Es wurde erfindungsgemäß, wie in den Tabellen A/1 und A/2 zusammengefaßt, gearbeitet.
Die entstandenen Pulver waren gut redispergierbar und wiesen gute Blockfestigkeiten auf.
Entsprechend der guten Redispergierbartkeit ergaben sich auch sehr gute Werte für die Biegezugfestigkeit. Bei allen Beispielen wurde das erforderliche Niveau des Ausbreitmaßes und der Abbindezeit erreicht.

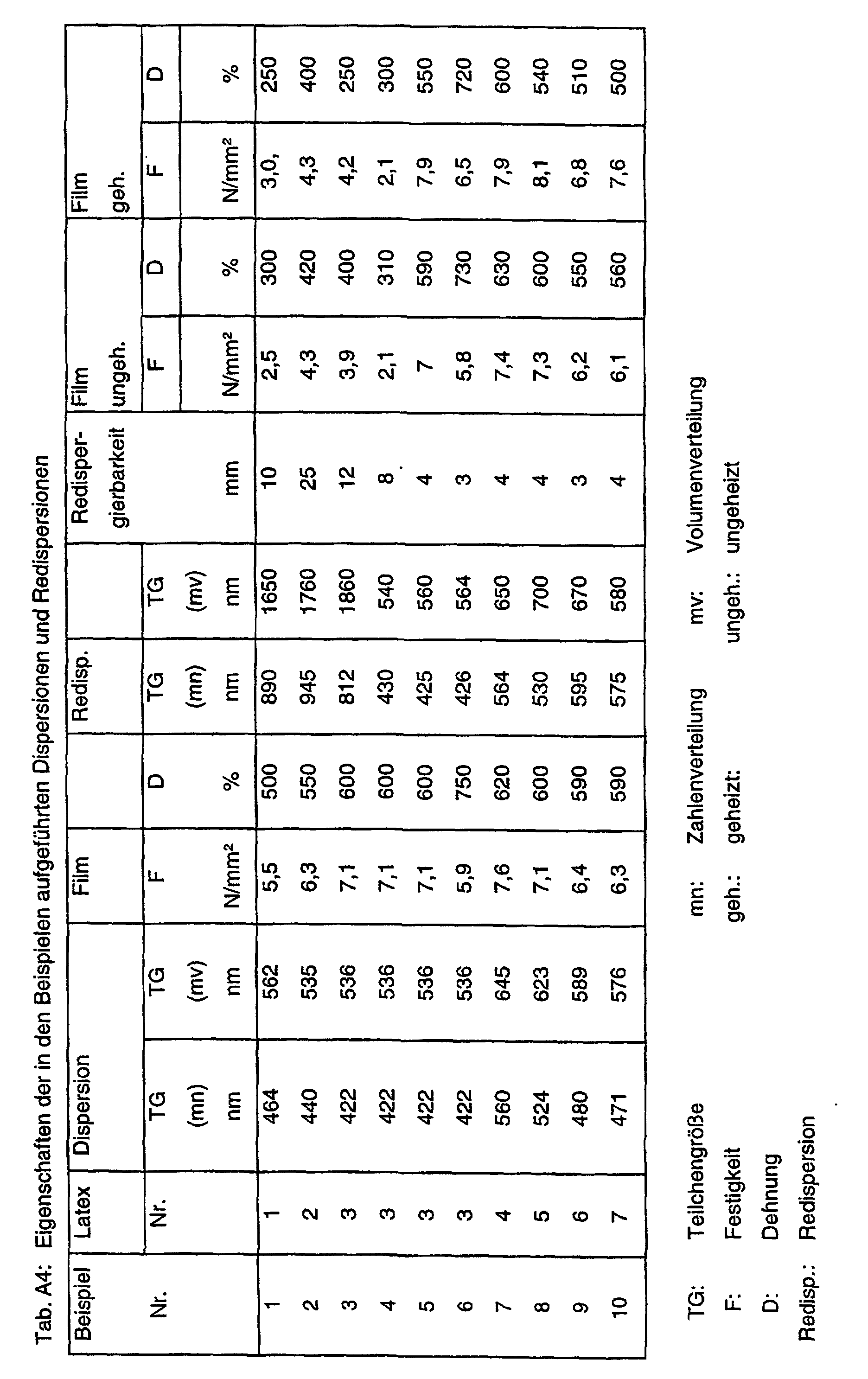

**Tab. A/5:**

| Eigenschaften der in den Beispielen hergestellten Pulver | | | | | |
|---|---|---|---|---|---|
| Beispiel Nr. | Blocktest Note | Ausbreitmaß 10 min/mm | Biegezugfestigkeit 3/7 Tage·N/mm2 | Biegezugfestigkeit 28 Tage·N/mm² | Wasseraufnahme % |
| 1 | 4 | 175 | 2,5/3,7 | 7,8 | 8,2 |
| 2 | 4-5 | 170 | 2,1/4,2 | 8,1 | 8,4 |
| 3 | 4 | 140 | 2,8/5,1 | 8,2 | 4,2 |
| 4 | 2 | 198 | 4,7/9,0 | 10,9 | 2,5 |
| 5 | 2-3 | 210 | 6,2/9,5 | 9,6 | 2,1 |
| 6 | 2 | 205 | 5,4/9,8 | 10,2 | 2,0 |
| 7 | 2 | 213 | 4,9/9,3 | 10,5 | 2,5 |
| 8 | 1 | 205 | 5,0/9,7 | 11,1 | 1,8 |
| 9 | 2-3 | 201 | 4,9/10,4 | 11,6 | 2,6 |
| 10 | 2-3 | 205 | 5,1/9,7 | 10,4 | 1,2 |

### Beispielkomplex B

**Tab. B/1:**

| Zusammenstellung der in den Beispielen verwendeten Copolymerdispersionen | | |
|---|---|---|
| Copolymer | Monomer | Gew.-% |
| 1 | Styren | 35 |
| | Butylacrylat | 55 |
| | Acrylsäure | 5 |
| | Acrylamid | 5 |
| 2 | Styren | 60 |
| | Butylacrylat | 40 |
| 3 | Styren | 38 |
| | Butylacrylat | 60 |
| | Acrylsäure | 2 |
| 4 | Styren | 39 |
| | Butylacrylat | 60 |
| | Methacrylsäure | 1 |
| 5 | Styren | 39,5 |
| | Butylacrylat | 60 |
| | Itaconsäure | 0,5 |
| 6 | Styren | 38 |
| | Ethylacrylat | 60 |
| | Acrylsäure | 2 |

In einem Sprühtrockner werden die in Tabelle B/1 aufgeführten Dispersionen mit den in Tabelle B/2 zusammengestellten Sprührezepturen bei einer Kopftemperatur von 130 °C und einer Ausgangstemperatur von 60 °C unter Zugabe von 12 Gew.-% feinverteiltem Aluminiumsilikat versprüht. In allen Fällen wurde ein rieselfähiges Pulver erhalten.

**Tab. B/2:**

| Sprührezepturen der einzelnen Beispiele | | | |
|---|---|---|---|
| Beispiel | Copolymer | Additionsprodukt Gew.-% bez. auf Polymer | Polyvinylalkohol 4-88 |
| 1 | 1 | ohne | 10 |
| 2 | 2 | ohne | 15 |
| 3 | 3 | ohne | 10 |
| 4 | 3 | 2 | 10 |
| 5 | 3 | 0,5 | 10 |
| 6 | 3 | 4 | 10 |
| 7 | 4 | 4 | 5 |
| 8 | 5 | 4 | 5 |
| 9 | 6 | 8 | 5 |
| 10 | 6 | 2 | 10 |

### Additionsprodukt: Tetra-Natrium-N-(1,2 dicarboxylethyl)-N-oleylsulfosuccinamat

Blockverhalten, Redispergierbarkeit und das Film/Dehnungsniveau werden wie in Beispielkomplex A beschrieben bestimmt.

Mit diesen Pulvem wurde nach der Rezeptur in Tab. B/3 ein Fliesenkleber hergestellt.

**Tab. B/3 :**

| Fliesenkleberrezeptur | |
|---|---|
| Bestandteil | Menge (g) |
| Sand (0,1 - 0,3) | 600 |
| Zement 42,5 | 365 |
| Weißkalkhydrat | 30 |
| Methylcellulose (Methocel 327) | 5 |
| Feststoff aus der Dispersion | 60 |
| Wasser | 297 |

Dieser Fliesenkleber wird nach der DIN 18 156 geprüft. Es werden die Haftzugfestigkeit und die Hautbildung bestimmt.
Weiterhin wird das Ausbreitmaß nach DIN 18 555 bestimmt.
Die Eigenschaften der verwendeten Dispersion und der aus den Pulvern hergestellten Redispersion sind in Tab.B/4 und die Eigenschaften der in den Beispielen hergestellten Pulver in Tab. B/5 aufgeführt.

### Beispiel B/1:

Der Latex Nr.1, gemäß EP 0601518, aus Tab.B/1 mit einem Styrengehalt von 35 Gew.-% wird, wie in Tab.B/2 zusammenfassend dargestellt, mit 10 Gew.-% Polyvinylalkohol 4-88 versetzt und versprüht. Die in der Typenbezeichnung 4-88 genannte 1.Zahl zeigt die Viskosität einer 4 %igen Lösung des Polyvinylalkohols gemessen in mPa s an, während die 2.Zahl den Hydrolysegrad des Polyvinylalkohols angibt.
Das entstandene Pulver war rieselfähig und wies eine gute Note im Blocktest auf. Es konnte jedoch keine vollständige Redispersion hergestellt werden, da ca. 15 Gew.-% des Pulvers nicht redispergierbar waren. Die aus der Redispersion gezogenen Filme waren rissig und von geringer Festigkeit.
Die weiteren Ergebnisse sind in Tab.B/4 zu finden.

### Beispiel B/2:

In diesem Beispiel wurde eine Acrylatdispersion eingesetzt, deren Polymer ohne modifizierende Zusätze von ungesättigter Carbonsäure oder Acrylamid gemäß Beispiel B/1 versprüht wird. Das entstandene Pulver war noch schlechter redispergierbar (ca. 20 Gew.-% unlösliche Bestandteile) und ergab damit verringerte Werte für die Biegezugfestigkeit. Außerdem muß bemerkt werden, daß dieses Pulver keine gute Blockfestigkeit aufwies.

### Beispiel B/3:

Es wurde die Dispersion 3 aus Tab. B/1 unter Zusatz von 10 Gew.-% Polyvinylalkohol 4-88 gemäß Beispiel B/1 und Tab. B/2 versprüht. Die Redispersionswerte verbesserten sich, erreichten aber nicht das erfindungsgemäße Niveau.

### Beispiele B/4 -B/ 10:

Es wurde erfindungsgemäß, wie in den Tabellen B/1 und B/2 zusammengefaßt, gearbeitet. Die entstandenen Pulver waren gut redispergierbar und wiesen gute Block-festigkeiten auf.
Entsprechend der guten Redispergierbarkeit ergaben sich auch sehr gute Werte für die Haftzugfestigkeit der Fliesen nach 7 und nach 28 Tagen. Es zeigte sich ein schneller Aufbau der Haftzugfestigkeit. In der Regel wurden schon nach 7 Tagen 90 % des Endniveaus erreicht.
Bei allen Beispielen wurde das erforderliche Niveau des Ausbreitmaßes und der Hautbildungszeit erreicht.

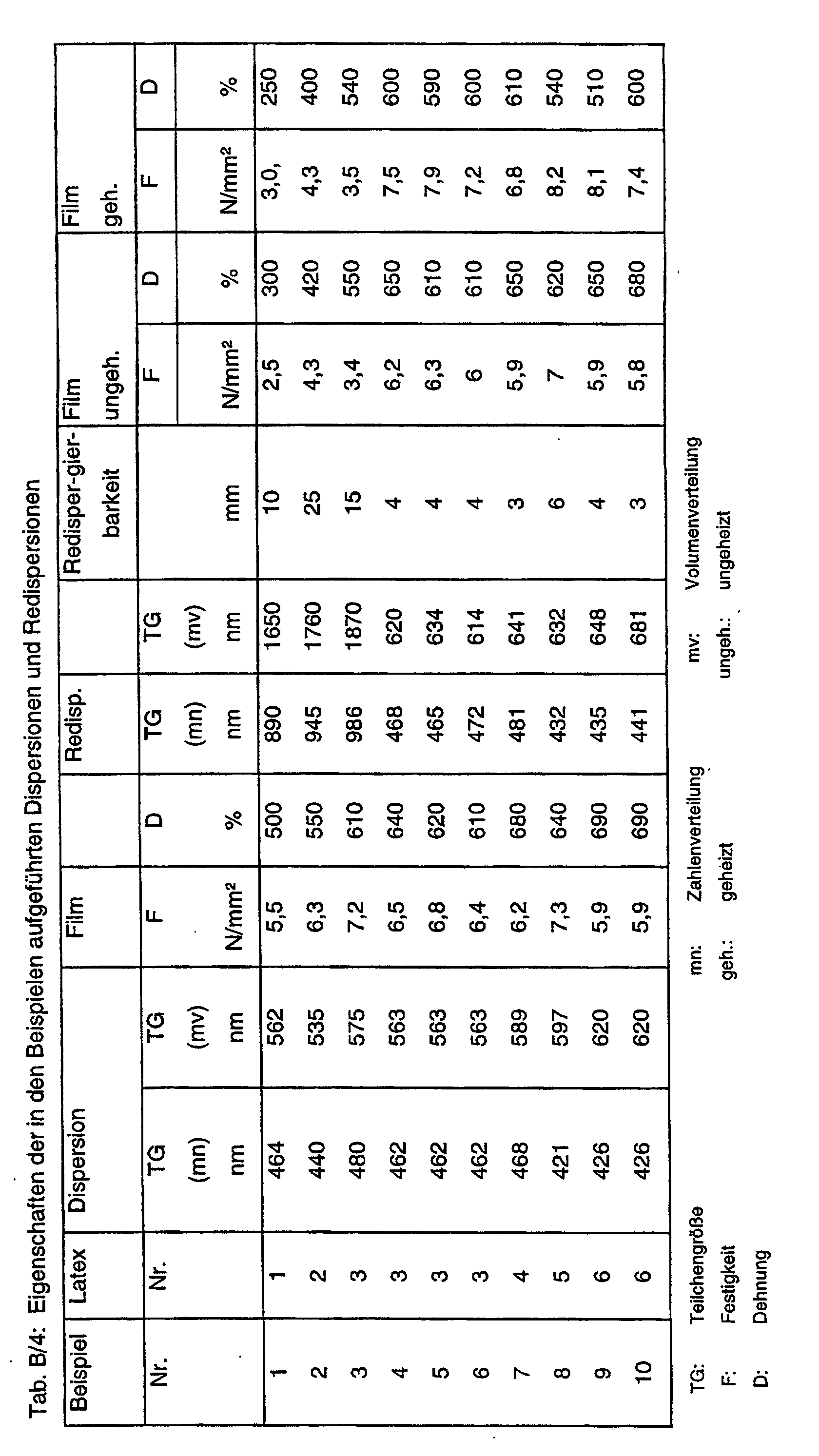

**Tab. B/5:**

| Eigenschaften der in den Beispielen hergestellten Pulver | | | | | |
|---|---|---|---|---|---|
| Beispiel Nr. | Blocktest Note | Ausbreitmaß 10 min/mm | Haftzugfestigkeit N/mm² nach 7 Tagen | Haftzugfestigkeit N/mm² nach 28 Tagen | Hautbildung min |
| 1 | 2 | 135 | 0,38 | 0,75 | < 5 |
| 2 | 3-4 | 145 | 0,57 | 0,74 | < 5 |
| 3 | 1-1 | 142 | 0,65 | 0,81 | < 5 |
| 4 | 1-2 | 140 | 1,24 | 1,35 | 20 |
| 5 | 1 | 135 | 1,31 | 1,45 | 25 |
| 6 | 2 | 138 | 1,11 | 1,25 | 20 |
| 7 | 2 | 142 | 1,02 | 1,30 | 30 |
| 8 | 1 | 137 | 1,15 | 1,32 | 25 |
| 9 | 1-2 | 135 | 1,19 | 1,36 | 25 |
| 10 | 1 | 128 | 1,20 | 1,28 | 20 |

## Patentansprüche

1. Redispergierbare Dispersionspulver auf Basis von Polyacrylaten **dadurch gekennzeichnet, daß** styrenhaltige Polyacrylate mit einem Gehalt an carbonsäuregruppenhaltigen Monomeren von 0,5 bis 4 Gew.-% mit Sprühhilfsmittelmischungen, bestehend aus 0,5 bis 20 Gew.-%, bezogen auf das Polymer, eines Di- oder Tetra-Natrium- bzw. Kalium-Salzes eines Additionsproduktes aus N-alkyl-sulfosuccinamaten mit Maleinsäure bzw. styrenhaltige Polyacrylate mit einem Gehalt an amingruppenhaltigen Monomeren von 0,5 bis 4 Gew.-% mit Sprühhilfsmittelmischungen, bestehend aus 0,5 bis 20 Gew.-%, bezogen auf das Polymer, eines Di- oder Tetra-Natrium- bzw. Kalium-Salzes eines Additionsproduktes aus N-alkyl-sulfosuccinamaten mit Maleinsäure und 1 bis 20 Gew.-%, bezogen auf das Polymer, entzuckertem Natrium-Ligninsulfonat mit einem Molekulargewicht > 20 000 versprüht werden .

2. Redispergierbare Dispersionspulver nach Anspruch 1 **dadurch gekennzeichnet, daß** als amingruppenhaltige Monomere Methacrylamid, Acrylamid, N-Methylolacrylamid, N-Dimethylamino-propyl-methacrylamid, 2 tert.-Butylamino-ethylmethacrylat, N,N Di-methylamino-ethylmethacrylat, N,N-Di-methylamino-propylmethacrylat, N,N Di-methylamino-ethylacrylat und/oder N,N-Dibutylaminoethylacrylat bzw, Mischungen hiervon eingesetzt werden.

3. Redispergierbare Dispersionspulver nach Anspruch 1 **dadurch gekennzeichnet, daß** als carbonsäuregruppenhaltige Monomere Acrylsäure, Methacrylsäure, Itaconsäure, Fumarsäure, und Maleinsäure allein bzw. Mischungen hiervon eingesetzt werden.

4. Redispergierbare Dispersionspulver nach den Ansprüchen 1 bis 3 **dadurch gekennzeichnet, daß** als Additionsprodukt aus Sulfosuccinamaten und Maleinsäure Tetra-Natrium-N-(1,2 dicarboxylethyl)-N-oleylsulfosuccinamat eingesetzt wird.

5. Redispergierbare Dispersionspulver nach den Ansprüchen 1 bis 4 **dadurch gekennzeichnet, daß** 0,5 bis 8 Gew.-% des Di- oder Tetra-Natrium- bzw. Kalium-Salzes des Additionsproduktes aus N-alkyl-sulfosuccinamaten mit Maleinsäure eingesetzt werden.

6. Redispergierbare Dispersionspulver nach den Ansprüchen 1,3,4 und 5 **dadurch gekennzeichnet, daß** 5 bis 15 Gew.-% entzuckertes Natrium-Ligninsuifonat eingesetzt werden.

## Claims

1. A redispersible dispersion powder based on polyacrylates whereby styrene-containing polyacrylates with a concentration of carboxylic acid group containing monomers of 0.5 to 4 percent by weight are sprayed with a mixture of atomizing aids of 0.5 to 20 percent by weight, relative to the polymer, of a disodium or tetra sodium or potassium salt of an addition product of N-alkyl-sulfosuccinamates with maleic acid, or whereby styrene-containing polyacrylates with a concentration of amino-group-containing monomers of 0.5 to 4 percent by weight are sprayed with a mixture of atomizing aids of 0.5 to 20 percent by weight, relative to the polymer, of a disodium or tetra sodium or potassium salt of an addition product of N-alkyl-sulfosuccinamates with maleic acid, and 1 to 20 percent by weight, relative to the polymer, of a desaccharified sodium lignin sulfonate with a molecular weight of > 20,000.

2. A redispersible dispersion powder according to claim 1 above, whereby methacrylamide, acrylamide, N-methylolacrylamide, N-dimethylamino-propylmethacrylamide, 2 tert.-butylamino-ethyl-methacrylate, N,N di-methylaminoethylmetacrylate, N,N-dimethylamino-propyl-methacrylate, N,N di-methylaminoethylacrylate and/or N,N-dibutylamino-ethylacrylate or mixtures thereof are used as amino-group-containing monomers.

3. A redispersible dispersion powder according to claim 1 above, whereby acrylic acid, methacrylic acid, itaconic acid, fumaric acid, and maleic acid either alone or in mixtures are used as carboxylic acid group containing monomers.

4. A redispersible dispersion powder according to claims 1 through 3 above, whereby tetra sodium-N-(1,2 dicarboxylethyl)-N-oleylsulfosuccinamate is used as the addition product of sulfosuccinamate and maleic acid.

5. A redispersible dispersion powder according to claims 1 through 4 above, whereby 0.5 to 8 percent by weight of the disodium or tetra sodium or potassium salt of the addition product of N-alkyl-sulfosuccinamates are used with maleic acid.

6. A redispersible dispersion powder according to claims 1, 3, 4 and 5 above, whereby 5 to 15 percent by weight of desaccharified sodium lignin sulfonate are used.

## Revendications

1. Poudre de dispersion redispersible à base de polyacrylates **caractérisée par le fait que** sont pulvérisés des polyacrylates contenant du styrène avec une teneur en monomères de 0,5 à 4 % en poids contenant des groupes d'acide carboxylique avec des mélanges d'adjuvants de pulvérisation, constitués de 0,5 à 20 % en poids par rapport au polymère, d'un sel de disodium ou tétrasodium ou potassium d'un produit d'addition de N-alkyle-sulfosuccinamates avec de l'acide maléique ou encore des polyacrylates contenant du styrène avec une teneur en monomères, contenant des groupes amine, de 0,5 à 4 % en poids avec des mélanges d'adjuvants de pulvérisation, constitués de 0,5 à 20 % en poids par rapport au polymère, d'un sel de disodium ou tétrasodium ou potassium d'un produit d'addition de N-alkyle-sulfosuccinamates avec de l'acide maléique et de 1 à 20 % en poids, par rapport au polymère, de sulfonate de lignine de sodium, dont on a extrait le sucre, avec un poids moléculaire > 20 000.

2. Poudre de dispersion redispersible selon la revendication 1 **caractérisée par le fait que** sont utilisés comme monomères contenant des groupes amine du méthacrylamide, acrylamide, N-méthylolacrylamide, N-diméthylamino-propyle-méthacrylamide, 2 tert.-butylamino-éthylméthacrylate, N,N di-méthylamino-éthylméthacrylate, N,N diméthylamino-propylméthacrylate, N,N di-méthylamino-éthylacrylate et/ou du N,N dibutylaminoéthyl-acrylate ou des mélanges de ceux-ci.

3. Poudre de dispersion redispersible selon la revendication 1 **caractérisée par le fait que** sont utilisés, comme monomères contenant des groupes d'acide carboxylique des acides acryliques, méthacryliques, itaconiques, fumariques et maléiques seuls ou des mélanges de ceux-ci.

4. Poudre de dispersion redispersible selon les revendications de 1 à 3 **caractérisée par le fait qu'**est utilisé comme produit d'addition aux sulfosuccinarnates et à l'acide maléique du tétra-sodium-N-(1,2 dicarboxyléthyle)-N-oléylsulfosuccinarnate.

5. Poudre de dispersion redispersible selon les revendications de 1 à 4 **caractérisée par le fait qu'**est utilisé 0,5 à 8 % en poids de sel de disodium ou tétrasodium ou potassium du produit d'addition de N-alkyle-sulfosuccinamates avec de l'acide maléique.

6. Poudre de dispersion redispersible selon les revendications 1, 3, 4 et 5 **caractérisée par le fait qu'**est utilisé de 5 à 15 % en poids de sulfonate de lignine de sodium, dont on a extrait le sucre.
